# EUROPÄISCHE PATENTSCHRIFT

(11) **EP 3 441 195 B1**
(45) Veröffentlichungstag und Bekanntmachung des Hinweises auf die Patenterteilung: **12.03.2025**
(21) Anmeldenummer: 18187450.4
(22) Anmeldetag: 06.08.2018
(51) Int. Cl.: B25H 3/00, G06Q 10/08, G07C 3/00

(54) **MATERIALWAGEN UND VERFAHREN ZUR ANDIENUNG VON ARBEITSMATERIAL AN EINE MASCHINE**
MATERIAL CARRIAGE AND METHOD TO DELIVER WORK MATERIAL TO A MACHINE
CHARIOT À MATÉRIEL ET PROCÉDÉ DE FOURNITURE DU MATÉRIEL DE TRAVAIL À UNE MACHINE

(30) Priorität: 07.08.2017 DE 102017117826
(43) Veröffentlichungstag der Anmeldung: 13.02.2019
(73) Patentinhaber: Bundesdruckerei GmbH, 10969 Berlin (DE)
(72) Erfinder: Wehner, Björn, 12623 Berlin (DE)
(74) Vertreter: Hentrich Patent- & Rechtsanwaltspartnerschaft mbB

(56) Entgegenhaltungen:
- US-A1- 2010 039 513
- US-A1- 2011 185 779
- US-A1- 2012 048 878
- US-A1- 2014 350 716
- US-A1- 2016 307 150
- US-B1- 9 643 638

## Beschreibung

Die Erfindung betrifft einen Materialwagen zur Andienung von, insbesondere als Verbrauchsmaterial gebildeten, Arbeitsmaterial an eine das Arbeitsmaterial verarbeitende Maschine. Außerdem betrifft die Erfindung ein entsprechendes Verfahren.

Derartige Wagen werden üblicherweise dazu verwendet, Arbeitsmaterialien einem Nutzer einer die Arbeitsmaterialien verarbeitenden Maschine bereitzustellen. Die Wagen werden dabei im Rahmen der Arbeitsvorbereitung zunächst in einem Materiallager mit den für die Arbeitsschicht des Nutzers benötigten Arbeitsmaterialien - also der Schichtmenge - beladen und dann in die unmittelbare Umgebung neben die Maschine gefahren und ermöglichen es dem Nutzer der Maschine, die Arbeitsmaterialien aus dem Wagen zu entnehmen und der Maschine zuzuführen. Ein Materialwagen gemäß dem Oberbegriff des Anspruchs 1 ist beispielsweise aus der DE 20 2010 011 399 U1 bekannt. Der darin gezeigte Werkstattwagen weist eine Reihe von Schubfächern auf, die mittels einer Schließvorrichtung gesichert werden können, um einen unbefugten Zugang zu dem Inhalt der Schubfächer zu unterbinden.

Zudem ist aus der DE 10 2014 207 572 A1 ein Materialträger für eine Werkstatt oder eine Fertigungsstätte bekannt, in dessen Rahmen ein oder mehrere Regalböden oder Schubladen angeordnet sind, in denen die anzudienenden Arbeitsmaterialien gelagert sind.

Das Problem bei den aus dem Stand der Technik bekannten Wagen ist jedoch, dass eine Überwachung des Zugriffs auf die in dem Materialwagen befindlichen Arbeitsmaterialen allenfalls begrenzt gegeben ist. So kann bei der aus der DE 20 2010 011 399 U1 bekannten Vorrichtung letztlich jeder die Schließvorrichtung aufschließen und Zugang zu dem Arbeitsmaterial erlangen, der im Besitz des passenden Schlüssels ist, und zwar unabhängig davon, ob dieser hierzu berechtigt ist oder nicht. Dies stellt daher ein nicht unerhebliches Sicherheitsrisiko dar, da insbesondere bei der Andienung sicherheitsrelevanter und/oder wertvoller Arbeitsmaterialien an eine die Arbeitsmaterialien verarbeitende Maschine sichergestellt werden muss, dass der Zugang zu den Arbeitsmaterialien durch nicht berechtigte Personen unterbunden ist.

Die US 2016/0307150 A1 beschreibt einen Werkzeugwagen der dazu ausgelegt ist, zu detektieren, ob ein Werkzeug innerhalb des Werkzeugwagens anwesend ist oder ob es entnommen wurde. Hierbei ist die optische Erkennung von RFID-Tags, die an den Werkzeugen angebracht sind oder die in den an die Werkzeuge angepassten Formen innerhalb der einzelnen Schubladen detektiert werden können.

US 2014/350716 A1 beschreibt einen Werkzeugwagen, der eine Füllstandsüberwachung von darin befindlichen Batteriepaketen (battery packs) durchführt. Das Überwachungsergebnis kann dann über ein Netzwerk an einen übergeordneten Server (inventory control server) übermittelt werden, in welchem auch die Anwesenheit oder Abwesenheit von im Werkzeugwagen enthaltenen Werkzeugen überwacht wird.

US 2010/0039513 A1 beschreibt einen Werkzeugwagen, der in seinem Inneren mit einer oder mit mehreren Kameras ausgestattet ist, um die in den Schubladen befindlichen Werkezeuge zu detektieren. Dieser Werkzeugwagen besitzt ebenfalls ein Zugangskontrollsystem, um zu überprüfen, ob der Nutzer berechtigt ist, bestimmte Werkzeuge aus dem Werkzeugkasten zu entnehmen.

Wenn keine Berechtigung vorliegt, so werden die Schubladen des Werkzeugwagens in einer Schließstellung gehalten.

In der US 2012/0048878 A1 ist ein fest installierter, mithin stationärer Werkzeugspender beschreiben. Bei diesem Automat lassen sich einzelne Schubladen oder Fronklappen motorbetrieben Öffnen und Schließen.

In der US 9,643,638 B1 ist ein ferngesteuerter, motorisierter und selbstfahrender Wagen beschrieben, welcher als ein Service Cart, als eine Tool Box, als eine Workstation oder dergleichen ausgestaltet ist.

Der Erfindung liegt daher die Aufgabe zugrunde, einen Materialwagen und ein Verfahren der eingangs genannten Art bereitzustellen, bei denen die Kontrolle über den Zugriff auf das in dem Materialwagen befindliche Arbeitsmaterial verbessert wird, wobei zudem der Produktion von Ausschuss vorgebeugt ist.

Die den Materialwagen betreffende Aufgabe wird mit einem Materialwagen gemäß dem Merkmalsbestand des Anspruchs 1 gelöst.

Der Materialwagen weist dabei ein Gehäuse auf, dem eine Mehrzahl von die Fortbewegung des Materialwagens ermöglichenden Rädern zugeordnet ist. Außerdem ist in dem Gehäuse mindestens ein Materialträger zur Aufnahme des Arbeitsmaterials ausgebildet. Auch ist dem Wagen eine den Zugriff auf den Materialträger ermöglichende, manuell oder automatisiert betätigbare Wagenfront zugeordnet, die durch eine Schließvorrichtung abschließbar ist. Erfindungsgemäß ist es hierbei vorgesehen, dass die Schließvorrichtung durch eine elektronische Authentifizierungseinrichtung zwischen einer den Zugriff auf den Materialträger unterbindenden Schließstellung und einer Offenstellung verstellbar ist, in der der Zugriff auf den Materialträger ermöglicht ist.

Durch die Authentifizierungseinrichtung ist es möglich, den Nutzer zu identifizieren, der die Authentifizierungseinrichtung betätigt. Wenn der identifizierte Nutzer hierzu die entsprechende Berechtigung besitzt, wird die Schließvorrichtung aus der Schließstellung in die Offenstellung überführt. Der Nutzer kann dann die Wagenfront zumindest teilweise öffnen und das Arbeitsmaterial aus oder von dem Materialträger entnehmen und der Maschine zuführen.

In diesem Zusammenhang hat es sich als besonders vorteilhaft erwiesen, wenn die Authentifizierungseinrichtung ausgewählt ist aus einer Gruppe, die Kartenleser, Erfassungsgeräte für biometrische Daten und PIN-Eingabefelder umfasst. Hierdurch ist es auf einfache Art und Weise möglich, den Nutzer, der das Arbeitsmaterial aus dem Materialwagen entnehmen möchte, eindeutig zu identifizieren und zu überprüfen, ob dieser die notwendige Berechtigung zur Entnahme des Arbeitsmaterials hat. Zudem wird insbesondere bei der Verwendung eines Erfassungsgerätes für biometrische Daten, wie einen Fingerabdruckscanner oder einen Irisscanner die Gefahr weiter reduziert, dass sich nicht berechtigte Personen Zugang zu dem Arbeitsmaterial verschaffen.

Um die unberechtigte Entnahme des Arbeitsmaterials auf dem Transportweg von dem Materiallager zu der das Arbeitsmaterial verarbeitenden Maschine weiter zu erschweren, ist erfindungsgemäß vorgesehen, dass der Authentifizierungseinrichtung ein Kommunikationsmodul zugeordnet ist zur Erfassung eines von der Maschine emittierten, die Schließvorrichtung aktivierenden Maschinensignals. Hierdurch wird gewährleistet, dass der Nutzer erst dann das Arbeitsmaterial aus dem Materialwagen entnehmen kann, wenn der Materialwagen das von der Maschine ausgesandte bzw. emittierte Maschinensignal empfängt, also mit dieser gekoppelt ist.

Somit ist also erfindungsgemäß vorgesehen, dass die das Arbeitsmaterial verarbeitende Maschine mit dem Materialwagen kommunikationsverbindbar oder koppelbar ist, und dass die Schließvorrichtung erst dann in die Offenstellung verstellt wird, wenn ein Kommunikationsmodul ein von der Maschine emittiertes Maschinensignal empfängt. Dies bietet zusätzlich Schutz davor, dass das im Materialwagen gelagerte Material der "falschen" Maschine zur Verarbeitung zugeführt wird, so dass zudem der Produktion von Ausschuss vorgebeugt ist.

Erfindungsgemäß ist vorgesehen, dass die Schließvorrichtung nur dann aktiviert wird, wenn das Maschinensignal einer vorgegebenen, mithin vordefinierten oder vorbestimmten, insbesondere eineindeutig identifizierbaren, Maschine erfasst wird.

Diese Koppelung oder das Kommunikationsverbinden kann dabei beispielsweise durch eine Funkverbindung mit geringer Reichweite, bspw. durch eine Bluetooth- oder eine NFC-Verbindung, realisiert sein. Hierdurch wird erreicht, dass die Koppelung und damit letztlich auch der Zugriff auf das Arbeitsmaterial erst dann möglich sind, wenn sich der Materialwagen unmittelbar neben der Maschine befindet. Ist der Materialwagen hingegen außerhalb der "Aura" der Maschine, also außerhalb der Reichweite des Maschinensignals, so ist der Materialwagen nicht mit der Maschine gekoppelt und damit die Schließvorrichtung deaktiviert. Der Nutzer kann dann zwar die Authentifizierungseinrichtung betätigen, dies führt jedoch nicht dazu, dass die Schließvorrichtung aus der Schließstellung in die Offenstellung überführt wird. Eine Ausnahme ist hierbei im Rahmen der Erfindung vorgesehen, wenn der Nutzer über eine entsprechende Berechtigung verfügt. In diesem Fall wird die Schließvorrichtung auch dann aktiviert, wenn das Kommunikationsmodul kein Maschinensignal erfasst.

Um die Materialentnahme überwachen und nachverfolgen zu können, hat es sich als besonders günstig gezeigt, wenn die Authentifizierungseinrichtung eine Speichereinheit umfasst zur Erfassung und Speicherung eines die Authentifizierungseinrichtung betätigenden Nutzers. Hierdurch lässt sich stets nachvollziehen, wer die Authentifizierungseinrichtung zu welchem Zeitpunkt betätigt hat. Alternativ oder ergänzend ist es in diesem Zusammenhang auch vorgesehen, dass die Informationen über den die Authentifizierungseinrichtung betätigenden Nutzer unmittelbar bspw. über Funk an eine zentrale Speichereinrichtung übermittelt werden.

Als vorteilhaft hat es sich zudem erwiesen, wenn eine Füllstandsüberwachung vorgesehen ist zur Erfassung des auf dem mindestens einen Materialträger enthaltenen Arbeitsmaterials. Dies lässt eine Überwachung des entnommenen Arbeitsmaterials zu. Gleichzeitig kann hierdurch aber auch die Restmenge des in dem Materialwagen befindlichen Arbeitsmaterials erfasst werden. Unterschreitet nun der Füllstand des Arbeitsmaterials einen vorgegebenen Sollwert, so kann beispielsweise eine Meldung abgegeben werden, mit der die Notwendigkeit signalisiert wird, den Materialbestand wieder aufzustocken. Die Füllstandsüberwachung kann dabei beispielsweise durch eine Wiegeeinrichtung oder durch eine optische Erfassungseinrichtung gebildet sein. Sind mehrere Materialträger in dem Materialwagen angeordnet oder diese noch weiter unterteilt, so kann jedem Materialträger oder den einzelnen Kompartimenten eine eigene Füllstandsüberwachung zugeordnet sein.

Hierbei hat es sich auch als besonders günstig erwiesen, wenn zur Ausgabe des Füllstandes eine Anzeigevorrichtung vorgesehen ist, die über eine Kommunikationsverbindung mit der Füllstandsüberwachung gekoppelt ist. Somit kann auf der Anzeigevorrichtung, die vorzugsweise als ein Display gebildet ist, stets die auf den Materialträgern noch vorhandene Materialmenge angezeigt werden. In diesem Zusammenhang ist es zudem auch von Vorteil, wenn eine Sendeeinrichtung vorgesehen ist zur drahtlosen Übermittlung der von der Füllstandsüberwachung erfassten Daten an eine zentrale Recheneinheit.

Insbesondere bei der Verwendung des Materialwagens in Druckereien, die Ausweisdokumente, wie beispielsweise Reisepässe oder Personalausweisdokumente erstellen, hat es sich als besonders günstig erwiesen, wenn die Materialträger ausgelegt sind zur Aufnahme von Materialbögen und/oder von Materialrollen.

Bewährt hat es sich darüber hinaus auch, wenn die Wagenfront eine Front umfasst, die ausgewählt ist aus einer Gruppe, die Schubladenfronten, Türen und Klappen beinhaltet. Bei der Verwendung von Türen und Klappen als Wagenfront oder als Teile hiervon sind die einzelnen Materialträger in dem Gehäuse beispielsweise durch Einlegebögen gebildet. Umfasst die Wagenfront hingegen Schubladenfronten, so bilden die korrespondierenden Schubladenböden der Schubladen die Materialträger. In diesem Zusammenhang hat es sich besonders bewährt, wenn die Wagenfront mindestens eine Schubladenfront einer durch einen automatischen Schubladenantrieb verstellbaren Schublade umfasst. Dieser Schubladenantrieb ermöglicht es, dass stets die das für den nächsten Arbeitsschritt benötigte Arbeitsmaterial enthaltende Schublade automatisch geöffnet wird, wodurch die Gefahr einer Fehlbedienung effektiv reduziert wird. Hierbei hat es sich als besonders günstig erwiesen, wenn eine mit der Maschine koppelbare Steuerungseinheit vorgesehen ist, die das Öffnen und Schließen des der Schublade zugeordneten Schubladenantriebs steuert. Somit können von der Steuerungseinheit entsprechende Signale der Maschine empfangen werden, wodurch stets die das für den nächsten Arbeitsschritt benötigte Arbeitsmaterial enthaltende Schublade automatisch geöffnet und nach der Entnahme des Arbeitsmaterials wieder geschlossen wird.

Bewährt hat es sich zudem, wenn auf den Materialträgern Anschläge ausgebildet sind, die ein Verrutschen des in den Schubladen befindlichen Arbeitsmaterials verhindern. Zudem wird durch die Verwendung von in den Materialträgern ausgebildeten Einkerbungen die Entnahme des Arbeitsmaterials erleichtert. Im Falle von Schubladen können diese Einkerbungen auch in einer oder in beiden Seitenwänden der Schubladen ausgebildet sein.

Für die Handhabbarkeit des erfindungsgemäßen Materialwagens hat es sich auch als günstig erwiesen, wenn zum Antreiben des Materialwagens eine Antriebseinrichtung vorgesehen ist. Die Antriebseinrichtung kann dabei eines oder mehrere der Räder antreiben. Alternativ ist es im Rahmen der Erfindung jedoch auch vorgesehen, dass die Antriebseinrichtung ein zusätzliches Antriebsrad aufweist, mit dem der Materialwagen angetrieben werden kann.

In diesem Zusammenhang hat es sich also auch als vorteilhaft herausgestellt, wenn die Antriebseinrichtung vorhanden und ausgestaltet ist, den Materialwagen motorunterstützt zwischen einer ersten Position, mithin vorzugsweise ausgehend von einem Materiallager, und einer zweiten Position, mithin vorzugsweise zu der das Arbeitsmaterial verarbeitenden Maschine, zumindest teilautomatisiert, vorzugsweise vollautomatisch, zu verfahren. In letzterem Falle ist der Materialwagen selbstfahrend ausgeführt.

Es ist zudem die Möglichkeit eröffnet, dass ein oder mehrere Fahrbefehle an den Materialwagen mittels einer übergeordneten zentralen Recheneinheit übergebbar sind, und dass der Materialwagen selbstfahrend derart ausgestaltet ist, um den einen oder die mehreren Fahrbefehle auszuführen. Hierduch lässt sich ein hoher Automatisierungsgrad für die Andienung von Arbeitsmaterial an die Maschine erzielen.

Die das Verfahren betreffende Aufgabe wird durch ein Verfahren gemäß Anspruch 11 gelöst. Es umfasst dabei die folgenden Schritte:
- Erfassen des Füllstandes des Arbeitsmaterials auf einem Materialträger des Materialwagens;
- gegebenenfalls Befüllen des Materialträgers durch einen berechtigten Nutzer, wenn der Füllstand des Arbeitsmaterials einen Sollwert unterschreitet;
- Bewegen des Materialwagens zu einer das Arbeitsmaterial verarbeitenden Maschine;
- Identifizieren eines Nutzers an einer Authentifizierungseinrichtung des Materialwagens;
- Verstellen einer Schließvorrichtung, die eine den Zugriff auf den Materialträger ermöglichenden Wagenfront schließt, aus einer Schließstellung in eine Offenstellung;
- Entnehmen des für den jeweiligen Arbeitsschritt erforderlichen Arbeitsmaterials von dem Materialträger; und
- Zuführen des Arbeitsmaterials zu der Maschine.

Durch das erfindungsgemäße Verfahren wird sichergestellt, dass insbesondere die Entnahme des Arbeitsmaterials aus dem Materialwagen aber auch dessen Befüllen nur durch einen berechtigten Nutzer erfolgen kann, wodurch eine unberechtigte Entnahme bzw. ein Entwenden von Arbeitsmaterial aus dem Materialwagen erschwert wird.

Als günstig hat es sich hierbei auch erwiesen, wenn eine Meldung, vorzugsweise an die zentrale Recheneinheit, abgegeben wird, wenn der Füllstand des Arbeitsmaterials einen Sollwert unterschreitet. Danach wird ein Wiederbefüllen veranlasst. Hierdurch wird sichergestellt, dass stets die erforderliche Menge an Arbeitsmaterial bereitgestellt ist. Der Materialwagen ist dann als ein automatisiertes KANBAN-System gebildet.

Um zu verhindern, dass das Arbeitsmaterial auf dem Weg zu der Maschine aus dem Materialwagen entwendet wird, ist erfindungsgemäß vorgesehen, dass die Schließvorrichtung erst dann aktiviert wird, mithin in die Offenstellung überführt wird, wenn der Materialwagen oder ein Kommunikationsmodul des Materialwagens ein von der Maschine emittiertes Maschinensignal erfasst oder empfängt.

Es hat sich als vorteilhaft erwiesen, wenn der Materialwagen mit einer Antriebseinrichtung zumindest teilautomatisiert zu der Maschine bewegt wird, aufgrund von einem Fahrbefehl oder aufgrund von mehreren Fahrbefehlen, die dem Materialwagen oder seinem Kommunikationsmodul von einer übergeordneten zentralen Recheneinheit übermittelt werden.

Im Folgenden wird die Erfindung an einem in der Zeichnung dargestellten Ausführungsbeispielen näher erläutert; es zeigen:
- Fig. 1: eine perspektivische Ansicht auf einen erfindungsgemäßen Materialwagen und
- Fig. 2: ein beispielhaftes Ablaufdiagramm der Andienung von Arbeitsmaterial an eine Maschine mit einem Materialwagen.

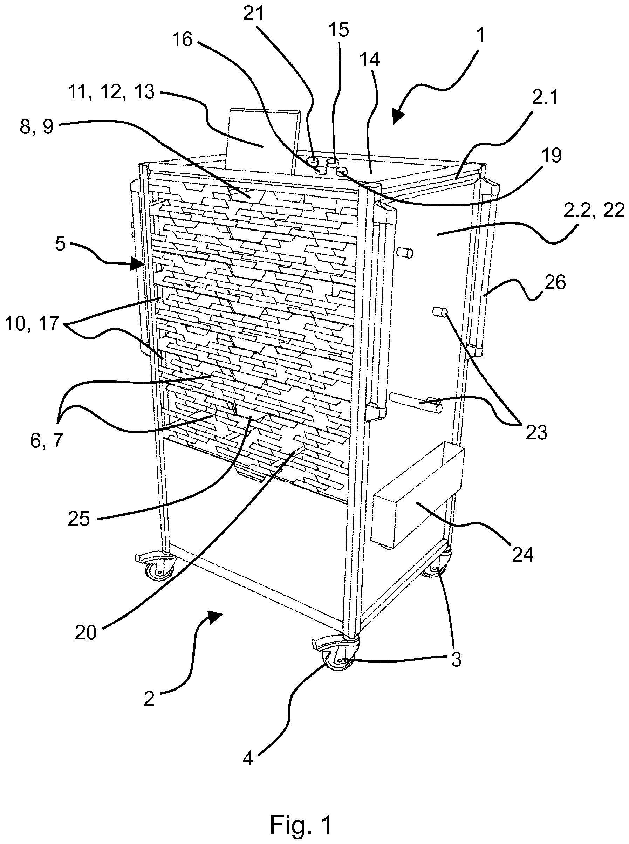

Figur 1 zeigt in einer perspektivischen Ansicht einen Materialwagen 1 mit einem Gehäuse 2 an dessen Unterseite eine Mehrzahl von Rollen 3 mit Rädern 4 angeordnet ist, um den Materialwagen 1 bewegen bzw. verfahren zu können. Das Gehäuse 2 besteht dabei aus einem aus Aluminiumprofilen gebildeten Rahmen 2.1, an dem Blenden 2.2 befestigt sind. An einer manuell oder automatisiert betätigbaren Wagenfront 5 des Gehäuses 2 ist eine Mehrzahl von Schubladenfronten 6 zu erkennen, die als Teil von Schubladen 7 gebildet sind. Die Schubladenböden der Schubladen 7 bilden dabei Materialträger 8, auf denen das anzudienende Arbeitsmaterial 9 aufgenommen ist. Die Schubladenfronten 6 bzw. die Schubladen 7 sind dabei jeweils durch eine Schließvorrichtung 10 gesichert, die durch eine elektronische Authentifizierungseinrichtung 11 zwischen einer den Zugriff auf den Materialträger 8 ermöglichenden Offenstellung und einer Schließstellung verstellbar ist, in der der Zugriff auf den Materialträger 8 unterbunden ist. In der Schließstellung lassen sich also die Schubladen 7 nicht öffnen und somit kann der Nutzer kein Arbeitsmaterial 9 von dem Materialträger 8 entnehmen. Erst wenn sich der über eine entsprechende Berechtigung verfügende Nutzer an der Authentifizierungseinrichtung 11 identifiziert hat, wird die Schließvorrichtung 10 aus der Schließstellung in die Offenstellung verstellt, was in dem gezeigten Ausführungsbeispiel elektronisch erfolgt. Der Nutzer kann dann die Schublade 7 öffnen und das Arbeitsmaterial 9 aus oder von dem Materialträger 8 entnehmen. Die Authentifizierungseinrichtung 11 ist hier als ein Fingerabdruckscanner 12 ausgeführt, der in eine Anzeigevorrichtung 13 integriert ist, die auf einer Oberseite 14 des Materialwagens 1 angeordnet ist. Um sich also zu identifizieren, muss der Nutzer lediglich seinen Finger auf den in der Anzeigevorrichtung 13 integrierten Fingerabdruckscanner 12 legen, wodurch überprüft wird, ob der Nutzer über die entsprechende Berechtigung verfügt, das in dem Materialwagen 1 befindliche Arbeitsmaterial 9 zu entnehmen.

Der Authentifizierungseinrichtung 11 ist in dem gezeigten Ausführungsbeispiel ein Kommunikationsmodul 15 zugeordnet, mit dem ein von der Maschine emittiertes Maschinensignal erfasst werden kann, um die Schließvorrichtungen 10 zu aktivieren. Nähert sich also der Materialwagen 1 der Maschine soweit an, dass das Maschinensignal von dem Kommunikationsmodul 15 erfasst wird, so werden die Schließvorrichtungen 10 aktiviert. Erst wenn sich der Materialwagen 1 in unmittelbarer Nähe der Maschine befindet, ist es daher möglich - nach erfolgreicher Identifizierung an der Authentifizierungseinrichtung 11 - die Schubladen 7 zu öffnen und das Arbeitsmaterial 9 von den Materialträgern 8 zu entnehmen, da erst dann eine erfolgreiche Identifikation auch zu einer Verstellung der Schließvorrichtungen 10 aus der Schließstellung in die Offenstellung führt. Zur Erfassung und Speicherung des die Authentifizierungseinrichtung 11 betätigenden Nutzers ist zudem eine Speichereinheit 16 vorgesehen, die neben der Identität des Nutzers auch den genauen Zeitpunkt erfasst, an dem dieser die Authentifizierungseinrichtung 11 betätigt.

Bei dem in der Figur 1 gezeigten Materialwagen 1 sind zudem Füllstandsüberwachungen 17 vorgesehen, die jeweils in die Schubladen 7 integriert sind und mit denen kontinuierlich die Menge des auf den jeweiligen Materialträgern 8 enthaltenen Arbeitsmaterials 9 erfasst wird. Die Füllstandsüberwachungen 17 sind dabei über eine Kommunikationsverbindung mit der Anzeigevorrichtung 13 gekoppelt, um dort den jeweilige Füllstand anzuzeigen. Außerdem ist eine Sendeeinrichtung 19 auf der Oberseite 14 des Gehäuses 2 angeordnet, mit der die von der Füllstandsüberwachungen 17 aber auch die von der Authentifizierungseinrichtung 11 erfassten und in der Speichereinheit 16 hinterlegten Daten drahtlos an eine zentrale Recheneinheit übermittelt werden. Eine Kontrolle des Füllstandes kann auch visuell erfolgen, da im gezeigten Ausführungsbeispiel die Wagenfronten 5 und/oder die Materialträger 8 zumindest teiltransparent gebildet sind. Ein nicht näher gezeigtes Ausführungsbeispiel sieht transparente Wagenfronten 5 und/oder transparente Materialträger 8 vor.

Die Verstellung der Schubladen 7, die gleichzeitig die Schubladenfronten 6 als Teil der Wagenfront 5 und die Materialträger 8 umfassen, erfolgt jeweils durch einen automatischen Schubladenantrieb 20, der die Schubladen 7 öffnet und schließt. Zur Steuerung der Schließvorrichtung 10 und der automatischen Schubladenantriebe 20 ist eine Steuerungseinheit 21 vorgesehen, die mit der Maschine gekoppelt ist und die die jeweilige Schließvorrichtung 10 und die automatischen Schubladenantriebe 20 der Schubladen 7 steuert. Somit wird stets die das für den jeweils nächsten Arbeitsschritt benötigte Arbeitsmaterial 9 enthaltende Schublade 7 automatisch geöffnet, damit der Nutzer das Arbeitsmaterial 9 daraus entnehmen und der Maschine zuführen kann. Vorzugsweise sind durch die Schließvorrichtung 10 diejenigen Schubladen 7 oder Fächer blockiert, in denen Arbeitsmaterial 9 gelagert ist, welches für den nächsten Arbeitsschritt der Maschine nicht benötigt wird.

Während die Schubladen 7 dazu ausgebildet sind, Materialbögen aufzunehmen, sind an einer Seitenwand 22 des Gehäuses 2 für die Aufnahme von zusätzlichem Rollenmaterial einerseits im Wesentlichen horizontal angeordnete Aufnahmerohre 23 und andererseits ein Balkon 24 angeordnet. Wie der Figur 1 auch zu entnehmen ist, sind an den Schubladenfronten 6 Aussparungen 25 anstelle von Griffen ausgebildet, wodurch die Entnahme des Arbeitsmaterials 9 aus dem hinteren Bereich der Schubladen 7 begünstigt wird. Zeichnerisch nicht dargestellt ist zudem eine zur Versorgung mit elektrischer Energie dienende Energiequelle, die beispielsweise als ein Akkumulator gebildet ist und neben der Spannungsversorgung unter anderem der Anzeigevorrichtung 13 und der Authentifizierungseinrichtung 11 auch einen die Räder 4 antreibenden Antrieb mit elektrischer Energie speist. An den Seitenwänden 22 sind zudem Handgriffe 26 angebracht, die ein Bewegen bzw. Verfahren des Materialwagens 1 erleichtern.

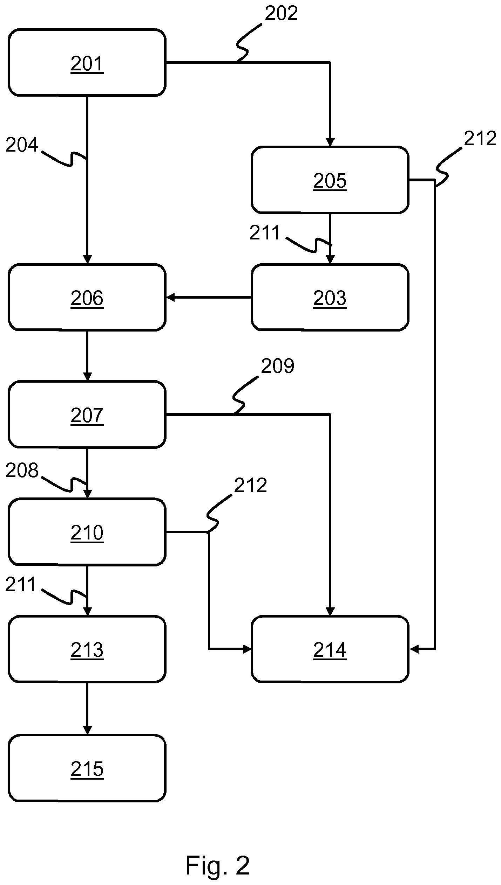

Im Folgenden wird das erfindungsgemäße Verfahren noch einmal im Detail anhand von Fig. 2 beschrieben. Ausgangspunkt ist dabei ein Materialwagen 1, der sich im Bereich eines Materiallagers befindet, in dem Arbeitsmaterialien 9 zentral gelagert werden. Zunächst werden durch Füllstandsüberwachungen 17 die einzelnen Füllstände der Arbeitsmaterialien 9 auf Materialträgern 8 des Materialwagens 1 erfasst (Schritt: Füllstandsabfrage 201). Wenn dabei ein Füllstand eines der Arbeitsmaterialien 9 einen vorgegebenen Sollwert unterschreitet (Sollwertunterschreitung 202), welcher der innerhalb einer Arbeitsschicht benötigten Materialmenge entspricht, so wird der jeweilige Materialträger 8 durch einen Nutzer, beispielsweise durch einen Kommissionierer, wieder befüllt (optionaler Schritt: Materialbefüllung 203). Hierdurch wird gewährleistet, dass das in dem Materialwagen 1 befindliche Arbeitsmaterial 9 für die Dauer einer Arbeitsschicht ausreicht. Andernfalls sollte die Füllstandsabfrage 201 ergeben, dass der Sollwert erreicht oder überschritten ist (Sollwerterfüllung 204). Um bei der Materialbefüllung 203 Zugriff zu den jeweiligen Materialträgern 8 zu erlangen, muss sich der Nutzer zunächst an einer Authentifizierungseinrichtung 11 identifizieren (optionaler Schritt: (Nach-)Füll-Berechtigungsprüfung 205). Verfügt der Nutzer über die entsprechende Berechtigung, werden Schließvorrichtungen 10, die Schubladen 7 und insbesondere deren Schubladenfronten 6 sichern und abschließen, aus der Schließstellung in die Offenstellung überführt, so dass es dem Nutzer nun möglich ist, die Schubladen 7 zu öffnen und die Materialträger 8 mit dem Arbeitsmaterial 9 zu befüllen, bis der Füllstand des Arbeitsmaterials 9 den vorgegebenen Sollwert erreicht oder überschreitet. Danach werden die Schließvorrichtungen 10 wieder aus der Offenstellung in die Schließstellung überführt und der Materialwagen 1 wird - vorzugsweise motorunterstützt - zu einer das Arbeitsmaterial 9 verarbeitenden Maschine gefahren (Schritt: Wagenbewegung 206). Zu diesem Zeitpunkt sind die Schließvorrichtungen 10 deaktiviert, so dass selbst bei einer Betätigung der Authentifizierungseinrichtung 11 die jeweilige Schließvorrichtung 10 nicht aus der Schließstellung in die Offenstellung verstellt werden kann. Zu diesem Zeitpunkt ist letztlich ohne eine spezielle Berechtigung eine Entnahme des Arbeitsmaterials 9 von den Materialträgern 8 nicht möglich. Sobald sich der Materialwagen 1 der Maschine nähert, kann ein der Authentifizierungseinrichtung 11 zugeordnetes Kommunikationsmodul 15 ein von der Maschine emittiertes Maschinensignal empfangen. Passt das vorgegebene Maschinensignal zum Materialwagen 1, so wird die Schließvorrichtung 10 des Materialwagens 1 aktiviert (fehlerfreies Signal 208). Wenn ein falsches oder fehlerhaftes Signal 209 vom Kommunikationsmodul 15 empfangen wird, so wird die Schließvorrichtung 10 inaktiv gehalten (Schritt: Inaktivstellen bzw. Inaktivhalten der Schließvorrichtung 214). Beim Empfang eines fehlerfreien Signals 208 ist die Maschine somit mit dem Materialwagen 1 gekoppelt und der Nutzer kann sich an der Authentifizierungseinrichtung 11 identifizieren (Schritt: Entnahmeberechtigungsprüfung 210). Nach erfolgreicher Identifizierung (fehlerfreie Identifizierung 211) wird nun die aktivierte Schließvorrichtung 10 aus der Schließstellung in die Offenstellung verstellt (Schritt: Materialfreigabe 213), um den Zugriff auf die Schubladen 7 bzw. auf die Schubladenfronten 6 zu ermöglichen. Ist die Identifizierung nicht erfolgreich (fehlerhafte Identifizierung 212), so wird die Schließvorrichtung 10 inaktiv gestellt, wodurch dann kein Material entnommen werden kann.

Gemäß einer besonders bevorzugten Ausführungsform wird das für den jeweils anstehenden Arbeitsschritt erforderliche Arbeitsmaterial 9 aus der entsprechenden Schublade 7 dem Nutzer automatisch bereitgestellt. Hierzu sind automatische Schubladenantriebe 20 vorgesehen, die durch eine mit der Maschine gekoppelte Steuerungseinrichtung 21 automatisch verstellt werden. Der Nutzer muss also lediglich das benötigte Arbeitsmaterial aus der geöffneten Schublade 7 entnehmen und der Maschine zuführen (Schritt: Materialentnahme 215).

Eine anderes Ausführungsbeispiel eines Materialwagens 1 sieht vor, dass die jeweilige Schließvorrichtung 10 als ein Zeitschloss ausgeführt ist, so dass dem Material entnehmenden Nutzer nur eine vorgebbare Zeit zur Verfügung steht, um Arbeitsmaterial 9 aus der vorgegebenen Schublade 7 bzw. von dem vorgegebenen Materialträger 8 zu entnehmen. Dies ermöglicht nicht nur eine Begrenzung der Entnahmemenge, sondern kann auch einen Takt für den Andienvorgang an die Maschine vorgeben.

Unterschreitet der Füllstand des Arbeitsmaterials 9 einen vorgegebenen Sollwert, so wird eine automatische Meldung abgegeben und das Arbeitsmaterial 9 entsprechend nachgefüllt. Um hierbei eine lückenlose Überwachung des verwendeten Arbeitsmaterials 9 gewährleisten zu können, erfolgt bei der Befüllung des Materialträgers 8 und/oder bei der Entnahme des Arbeitsmaterials 9 von dem Materialträger 8 eine Erfassung des jeweiligen Nutzers. Somit kann der Weg des verwendeten Arbeitsmaterials 9 lückenlos nachvollzogen werden.

### Bezugszeichenliste

- 1: Materialwagen
- 2: Gehäuse
- 2.1: Rahmen
- 2.2: Blende
- 3: Rolle
- 4: Rad
- 5: Wagenfront
- 6: Schubladenfront
- 7: Schublade
- 8: Materialträger
- 9: Arbeitsmaterial
- 10: Schließvorrichtung
- 11: Authentifizierungseinrichtung
- 12: Fingerabdruckscanner
- 13: Anzeigevorrichtung
- 14: Oberseite
- 15: Kommunikationsmodul
- 16: Speichereinheit
- 17: Füllstandsüberwachung
- 19: Sendeeinrichtung
- 20: Schubladenantrieb
- 21: Steuerungseinheit
- 22: Seitenwand
- 23: Aufnahmerohr
- 24: Balkon
- 25: Aussparung
- 26: Handgriff
- 201: Füllstandsabfrage
- 202: Sollwertunterschreitung
- 203: Materialbefüllung
- 204: Sollwerterfüllung
- 205: Füll-Berechtigungsprüfung
- 206: Wagen(fort-)bewegung
- 207: Maschinensignalempfang
- 208: Fehlerfreies Signal erhalten
- 209: Fehlerhaftes Signal erhalten
- 210: Entnahmeberechtigungsprüfung
- 211: Fehlerfreie Prüfung/Identifizierung
- 212: Fehlerhafte Prüfung/Identifizierung
- 213: Materialfreigabe
- 214: Inaktivstellen/-halten der Schließvorrichtung
- 215: Materialentnahme

## Patentansprüche

1. Materialwagen (1) zur Andienung von Arbeitsmaterial (9) an eine das Arbeitsmaterial (9) verarbeitende Maschine, mit einem Gehäuse (2), dem eine Mehrzahl von die Fortbewegung des Materialwagens (1) ermöglichenden Rädern (4) zugeordnet sind, mit mindestens einem in dem Gehäuse (2) angeordneten Materialträger (8) zur Aufnahme des Arbeitsmaterials (9) und mit einer den Zugriff auf den Materialträger (8) ermöglichenden, manuell oder automatisiert betätigbaren Wagenfront (5), die durch eine Schließvorrichtung (10) abschließbar ist, wobei die Schließvorrichtung (10) durch eine elektronische Authentifizierungseinrichtung (11) zwischen einer den Zugriff auf den Materialträger (8) unterbindenden Schließstellung und einer Offenstellung verstellbar ist, in der der Zugriff auf den Materialträger (8) ermöglicht ist, **dadurch gekennzeichnet, dass** der Authentifizierungseinrichtung (11) ein Kommunikationsmodul (15) zugeordnet ist, dass die das Arbeitsmaterial (9) verarbeitende Maschine mit dem Materialwagen (1) zur Erfassung eines von der Maschine emittierten Maschinensignals kommunikationsverbindbar oder koppelbar ist, und dass die Schließvorrichtung (10) erst dann in die Offenstellung verstellt wird, wenn das Kommunikationsmodul (15) ein von der Maschine emittiertes Maschinensignal empfängt,
wobei beim Empfang eines zum Materialwagen (1) passenden Maschinensignals in Form eines fehlerfreien Signals (208) die Maschine mit dem Materialwagen (1) gekoppelt ist und die Schließvorrichtung (10) des Materialwagens (1) aktiviert wird,
wobei sich ein Nutzer beim Empfang des fehlerfreien Signals (208) an der Authentifizierungseinrichtung (11) identifizieren kann,
und wobei nach erfolgreicher Identifizierung durch den Nutzer die aktivierte Schließvorrichtung (10) aus der Schließstellung in die Offenstellung verstellt wird.

2. Materialwagen (1) nach Anspruch 1 **dadurch gekennzeichnet, dass** die Authentifizierungseinrichtung (11) ausgewählt ist aus einer Gruppe, die Kartenleser, Erfassungsgeräte für biometrische Daten und PIN-Eingabefelder umfasst.

3. Materialwagen (1) nach Anspruch 1 oder 2, **dadurch gekennzeichnet, dass** die Authentifizierungseinrichtung (11) eine Speichereinheit (16) umfasst zur Erfassung und Speicherung des die Authentifizierungseinrichtung (11) betätigenden Nutzers.

4. Materialwagen (1) nach einem der Ansprüche 1 bis 3, **dadurch gekennzeichnet, dass** eine Füllstandsüberwachung (17) vorgesehen ist zur Erfassung des auf dem mindestens einen Materialträger (8) enthaltenen Arbeitsmaterials (9).

5. Materialwagen (1) nach Anspruch 4, **dadurch gekennzeichnet, dass** zur Ausgabe des Füllstandes eine Anzeigevorrichtung (13) vorgesehen ist, die über eine Kommunikationsverbindung mit der Füllstandsüberwachung (17) gekoppelt ist.

6. Materialwagen (1) nach Anspruch 4 oder 5, **dadurch gekennzeichnet, dass** eine Sendeeinrichtung (19) vorgesehen ist zur drahtlosen Übermittlung der von der Füllstandsüberwachung (17) erfassten Daten an eine zentrale Recheneinheit.

7. Materialwagen (1) nach einem der Ansprüche 1 bis 6, **dadurch gekennzeichnet, dass** der mindestens eine Materialträger (8) ausgelegt ist zur Aufnahme von Materialbögen (22) und/oder von Materialrollen (23).

8. Materialwagen (1) nach einem der Ansprüche 1 bis 7, **dadurch gekennzeichnet, dass** die Wagenfront (5) mindestens eine Schubladenfront (6) einer vorzugsweise durch einen automatischen Schubladenantrieb (20) verstellbaren Schublade (7) umfasst.

9. Materialwagen (1) nach einem der Ansprüche 1 bis 8, **dadurch gekennzeichnet, dass** eine Antriebseinrichtung vorhanden und derart ausgestaltet ist, den Materialwagen (1) motorunterstützt zwischen einer ersten Position und einer zweiten Position zumindest teilautomatisiert zu verfahren.

10. Materialwagen (1) nach Anspruch 9, **dadurch gekennzeichnet, dass** ein oder mehrere Fahrbefehle an den Materialwagen (1) mittels einer übergeordneten zentralen Recheneinheit übergebbar sind, und dass der Materialwagen (1) selbstfahrend derart ausgestaltet ist, um den einen oder die mehreren Fahrbefehle auszuführen.

11. Verfahren zum Andienen von in einem Materialwagen (1) nach einem der Ansprüche 1 bis 10 gelagerten Arbeitsmaterial (9) an eine das Arbeitsmaterial (9) verarbeitende Maschine, umfassend die Schritte:
- Erfassen des Füllstandes des Arbeitsmaterials (9) auf einem Materialträger (8) des Materialwagens (1);
- gegebenenfalls Befüllen des Materialträgers (8) durch einen berechtigen Nutzer, wenn der Füllstand des Arbeitsmaterials (9) einen Sollwert unterschreitet;
- Bewegen des Materialwagens (1) zu einer das Arbeitsmaterial (9) verarbeitenden Maschine, wobei die verarbeitende Maschine mit dem Materialwagen (1) zur Erfassung eines von der Maschine emittierten Maschinensignals kommunikationsverbunden wird, wobei beim Empfang eines zum Materialwagen (1) passenden Maschinensignals in Form eines fehlerfreien Signals (208) die Maschine mit dem Materialwagen (1) gekoppelt wird, wobei eine Schließvorrichtung (10) des Materialwagens (1) aktiviert wird, und wobei sich ein Nutzer an einer Authentifizierungseinrichtung (11) identifizieren kann;
- Identifizieren des Nutzers an der Authentifizierungseinrichtung (11) des Materialwagens (1);
- nach erfolgreicher Identifizierung durch den Nutzer an der Authentifizierungsvorrichtung (11) Verstellen der Schließvorrichtung (10), die eine den Zugriff auf den Materialträger (8) ermöglichenden Wagenfront (5) sichert, aus einer Schließstellung in eine Offenstellung, wobei die Schließvorrichtung (10) erst dann in die Offenstellung verstellt wird, wenn das Kommunikationsmodul (15) ein von der Maschine emittiertes Maschinensignal empfängt;
- Entnehmen des für den jeweiligen Arbeitsschritt erforderlichen Arbeitsmaterials (9) von dem Materialträger (8) ; und
- Zuführen des Arbeitsmaterials (9) zu der Maschine.

12. Verfahren nach Anspruch 11, **dadurch gekennzeichnet, dass** der Materialwagen (1) mittels einer Antriebseinrichtung zumindest teilautomatisiert zu der Maschine bewegt wird, aufgrund von einem Fahrbefehl, die dem Materialwagen (1) von einer übergeordneten zentralen Recheneinheit übermittelt wird.

## Claims

1. A material car (1) for delivering work material (9) to a machine processing the work material (9), having a housing (2) with which a plurality of wheels (4) enabling the material car (1) to move are associated, having at least one material carrier (8) arranged in the housing (2) for receiving the work material (9), and having a front (5) which can be actuated manually or automatically and which can be locked by a locking device (10), whereas the locking device (10) is able to be actuated by an electronic authentication device (11) between a closed position, in which access to the material carrier (8) is denied, and an open position, in which access to the material carrier (8) is granted, **characterized in that** a communication module (15) is assigned to the authentication device (11), **in that** the machine processing the work material (9) can be communicatively connected or coupled to the material car (1) in order to detect a machine signal emitted by the machine, and **in that** the locking device (10) is only moved into the open position when the communication module (15) receives a machine signal emitted by the machine,
wherein upon receipt of a machine signal matching to the material car (1) in the form of an error-free signal (208), the machine is coupled to the material car (1) and the locking device (10) of the material car (1) is activated,
wherein a user can identify himself at the authentication device (11) upon receipt of the error-free signal (208),
and wherein, after successful identification by the user, the activated locking device (10) is moved from the closed position to the open position.

2. The material car (1) according to claim 1, **characterized in that** the authentication device (11) is selected from a group comprising card readers, biometric data capture devices and **PIN** input fields.

3. The material car (1) according to claim 1 or 2, **characterized in that** the authentication device (11) comprises a storage unit (16) for recording and storing the user operating the authentication device (11).

4. The material car (1) according to any one of claims 1 to 3, **characterized in that** a fill level monitoring device (17) is provided for detecting the work material (9) contained on the at least one material carrier (8).

5. The material car (1) according to claim 4, **characterized in that** a display device (13) is provided for outputting the fill level, which is coupled to the fill level monitoring device (17) via a communication link.

6. The material car (1) according to claim 4 or 5, **characterized in that** a sender (19) is provided for wireless transmission of the data recorded by the fill level monitoring device (17) to a central computing unit.

7. Material car (1) according to any one of claims 1 to 6, **characterized in that** the at least one material carrier (8) is designed to receive material sheets (22) and/or material rolls (23).

8. The material car (1) according to any one of claims 1 to 7, **characterized in that** the front (5) comprises at least one drawer front (6) of a drawer (7) which is preferably adjustable by an automatic drawer slide (20).

9. The material car (1) according to any one of claims 1 to 8, **characterized in that** a drive device is present and is designed to move the material car (1) between a first position and a second position in an at least partially automated manner with motor support.

10. The material car (1) according to claim 9, **characterized in that** one or more moving commands can be transmitted to the material car (1) by means of a higher-level central computing unit, and **in that** the material car (1) is designed to be self-propelled in such a way as to execute the one or more moving commands.

11. A method for delivering work material (9) stored in a material car (1) according to any one of claims 1 to 10 to a machine processing the work material (9), comprising the steps of:
- detecting the fill level of the work material (9) on a material carrier (8) of the material car (1);
- if necessary, filling the material carrier (8) by an authorized user if the fill level of the work material (9) falls below a setpoint value;
- moving the material car (1) to a machine processing the work material (9), wherein the processing machine is communicatively connected to the material car (1) for detecting a machine signal emitted by the machine, wherein upon receipt of a machine signal matching to the material car (1) in the form of an error-free signal (208), the machine is coupled to the material car (1), wherein a locking device (10) of the material car (1) is activated, and wherein a user can identify himself at an authentication device (11);
- identifying the user at the authentication device (11) of the material car (1);
- after successful identification by the user at the authentication device (11), actuating the locking device (10), which secures a front (5) allowing access to the material carrier (8), from a closed position to an open position, the locking device (10) only being moved to the open position when the communication module (15) receives a machine signal emitted by the machine;
- taking the work material (9) required for the respective work step from the material carrier (8); and
- adding the work material (9) to the machine.

12. The method according to claim 11, **characterized in that** the material car (1) is moved at least partially automatically to the machine by means of a drive device on the basis of a moving command transmitted to the material car (1) by a higher-level central computing unit.

## Revendications

1. Chariot à matériel (1) pour la fourniture du matériel de travail (9) à une machine traitant le matériel de travail (9), avec un boîtier (2) auquel sont associées une pluralité de roues (4) permettant le déplacement du chariot à matériel (1), avec au moins un support de matériel (8) agencé dans le boîtier (2) pour la réception du matériel de travail (9) et avec une partie avant de chariot (5) permettant l'accès au support de matériel (8), actionnable de manière manuelle ou automatisée qui peut être verrouillée par un dispositif de fermeture (10), dans lequel le dispositif de fermeture (10) peut être déplacé par un dispositif d'authentification (11) électronique entre une position de fermeture empêchant l'accès au support de matériel (8) et une position d'ouverture, dans laquelle l'accès au support de matériel (8) est permis, **caractérisé en ce qu'**un module de communication (15) est associé au dispositif d'authentification (11), **en ce que** la machine traitant le matériel de travail (9) peut être reliée en communication ou couplée au chariot de matériel (1) pour la détection d'un signal de machine émis par la machine, et **en ce que** le dispositif de fermeture (10) n'est déplacé dans la position d'ouverture que lorsque le module de communication (15) reçoit un signal de machine émis par la machine,
dans lequel lors de la réception d'un signal de machine adapté au chariot de matériel (1) sous la forme d'un signal (208) sans défaut, la machine est couplée au chariot de matériel (1) et le dispositif de fermeture (10) du chariot de matériel (1) est activé,
dans lequel un utilisateur peut s'identifier lors de la réception du signal (208) sans défaut au niveau du dispositif d'authentification (11),
et dans lequel après identification réussie par l'utilisateur, le dispositif de fermeture (10) activé est déplacé de la position de fermeture dans la position d'ouverture.

2. Chariot de matériel (1) selon la revendication 1, **caractérisé en ce que** le dispositif d'authentification (11) est sélectionné à partir d'un groupe qui comprend des lecteurs de carte, des appareils de détection pour des données biométriques et des champs de saisie PIN.

3. Chariot de matériel (1) selon la revendication 1 ou 2, **caractérisé en ce que** le dispositif d'authentification (11) comprend une unité de mémoire (16) pour la détection et la mémorisation de l'utilisateur actionnant le dispositif d'authentification (11).

4. Chariot de matériel (1) selon l'une quelconque des revendications 1 à 3, **caractérisé en ce qu'**une surveillance de niveau (17) est prévue pour la détection du matériel de travail (9) contenu sur l'au moins un support de matériel (8).

5. Chariot de matériel (1) selon la revendication 4, **caractérisé en ce qu'**un dispositif d'affichage (13) est prévu pour la sortie du niveau, lequel est couplé par le biais d'une liaison de communication à la surveillance de niveau (17).

6. Chariot de matériel (1) selon la revendication 4 ou 5, **caractérisé en ce qu'**un dispositif d'émission (19) est prévu pour la transmission sans fil des données détectées par la surveillance de niveau (17) à une unité de calcul centrale.

7. Chariot de matériel (1) selon l'une quelconque des revendications 1 à 6, **caractérisé en ce que** l'au moins un support de matériel (8) est conçu pour la réception de feuilles de matériel (22) et/ou de rouleaux de matériel (23).

8. Chariot de matériel (1) selon l'une quelconque des revendications 1 à 7, **caractérisé en ce que** la partie avant de chariot (5) comprend au moins une partie avant de tiroir (6) d'un tiroir (7) pouvant être déplacé de préférence par un entraînement de tiroir (20) automatique.

9. Chariot de matériel (1) selon l'une quelconque des revendications 1 à 8, **caractérisé en ce qu'**un dispositif d'entraînement est présent et conçu afin de déplacer le chariot de matériel (1) avec une assistance motorisée entre une première position et une seconde position au moins de manière partiellement automatisée.

10. Chariot de matériel (1) selon la revendication 9, **caractérisé en ce qu'**un ou plusieurs ordres de déplacement peuvent être remis au moyen d'une unité de calcul centrale globale, et **en ce que** le chariot de matériel (1) est conçu de manière automotrice afin de réaliser les un ou plusieurs ordres de déplacement.

11. Procédé de fourniture de matériel de travail (9) logé dans un chariot de matériel (1) selon l'une quelconque des revendications 1 à 10 à une machine traitant le matériel de travail (9), comprenant les étapes :
- la détection du niveau du matériel de travail (9) sur un support de matériel (8) du chariot de matériel (1) ;
- éventuellement le remplissage du support de matériel (8) par un utilisateur autorisé lorsque le niveau du matériel de travail (9) reste en dessous d'une valeur de consigne ;
- le déplacement du chariot de matériel (1) vers une machine (9) traitant le matériel de travail (9), dans lequel la machine de traitement est reliée en communication au chariot de matériel (1) pour la détection d'un signal de machine émis par la machine, dans lequel lors de la réception d'un signal de machine adapté au chariot de matériel (1) sous la forme d'un signal (208) sans défaut, la machine est couplée au chariot de matériel (1), dans lequel un dispositif de fermeture (10) du chariot de matériel (1) est activé, et dans lequel un utilisateur peut s'identifier au niveau d'un dispositif d'authentification (11) ;
- l'identification de l'utilisateur au niveau du dispositif d'authentification (11) du chariot de matériel (1) ;
- après l'identification réussie par l'utilisateur au niveau du dispositif d'authentification (11), le déplacement du dispositif de fermeture (10) qui fixe une partie avant de chariot (5) permettant l'accès au support de matériel (8), d'une position de fermeture dans une position d'ouverture, dans lequel le dispositif de fermeture (10) n'est déplacé dans la position d'ouverture que lorsque le module de communication (15) reçoit un signal de machine émis par la machine ;
- le retrait du matériel de travail (9) nécessaire à l'étape de travail respective du support de matériel (8) ; et
- l'amenée du matériau de travail (9) à la machine.

12. Procédé selon la revendication 11, **caractérisé en ce que** le chariot de matériel (1) est déplacé au moyen d'un dispositif d'entraînement au moins de manière partiellement automatisée vers la machine, en raison d'un ordre de déplacement qui est transmis au chariot de matériel (1) par une unité de calcul centrale globale.
